# FASCICULE DE BREVET EUROPEEN

(11) **EP 0 914 023 B1**
(45) Date de publication et mention de la délivrance du brevet: **21.05.2003**
(21) Numéro de dépôt: 98402733.4
(22) Date de dépôt: 02.11.1998
(51) Int. Cl.: H05B 3/82, A47J 37/12

(54) **Appareil électrique de cuisson, en particulier friteuse**
Elektrisches Gargerät, insbesondere Friteuse
Electrical cooking apparatus such as a deep fryer

(43) Date de publication de la demande: 06.05.1999
(73) Titulaire: SEB S.A., 69130 Ecully (FR)
(72) Inventeur: Imbeaud, Jacques, 14320 Feuguerolles Bully (FR)
(74) Mandataire: Kiehl, Hubert

(56) Documents cités:
- EP-A- 0 560 431
- WO-A-94/18807
- DE-A- 19 547 705
- DE-A- 19 847 670
- FR-A- 2 770 120
- GB-A- 2 298 780

## Description

La présente invention se rapporte aux appareils électriques de cuisson d'aliments qui comportent, dans un boîtier, une cuve en tôle montée fixe ou amovible et contenant un bain de cuisson, et des moyens de chauffage électrique associés à la cuve.

Elle s'applique notamment mais non exclusivement aux friteuses électriques destinées à la cuisson, dans un bain d'huile en particulier, d'aliments tels que des frites, des poissons ou de la viande.

Dans les appareils de cuisson connus de ce type, tels que décrits dans le document GB-A-2 298 780, les moyens de chauffage électrique sont constitués par une résistance tubulaire blindée qui est fixée à demeure sur la cuve en tôle, que celle-ci soit fixe ou amovible. Toutefois, ce type de résistance de chauffage ne permet pas une bonne homogénéité de la répartition de la température, ni un transfert thermique optimal entre la résistance et la cuve, de sorte que la montée en température de la cuve de cuisson est assez lente, ce qui augmente alors le temps de cuisson des aliments ainsi que le temps de chauffe du bain d'huile dans le cas d'une réalisation de fritures.

On connaît également, d'après le document WO-A-94 18807, une bouilloire électrique comportant un élément chauffant plat constitué par une résistance électrique sérigraphiée montée fixement sur un élément de contrôle et disposée à travers une découpe pratiquée dan le fond du corps de l'appareil. Toutefois, cet élément chauffant plat n'est pas fixé directement sur le fond du corps bordant la découpe, rendant dès lors difficile son montage dans cette découpe.

L'invention a notamment pour but de remédier à ces inconvénients et de réaliser un appareil électrique de cuisson d'aliments, du type exposé ci-dessus, qui procure une mise en chauffe rapide du bain de cuisson tout en assurant une répartition uniforme du chauffage, et qui soit de fabrication peu coûteuse.

Selon l'invention, les moyens de chauffage comprennent un élément chauffant plat à résistance électrique sérigraphiée, qui est rapporté dans une découpe pratiquée dans le fond de la cuve, et le fond de la cuve bordant la découpe présente un rebord périphérique tourné vers le bas et sur lequel est rapporté par sertissage l'élément chauffant plat.

Ainsi, cette résistance chauffante plate sérigraphiée, par sa faible inertie thermique, permet d'obtenir un enclenchement immédiat du chauffage, ainsi qu'une montée en température très rapide du bain de cuisson, et répartit la température de chauffage de façon homogène sur toute la surface de fond de la cuve. En outre, le fait d'avoir pratiqué une découpe dans le fond de la cuve en tôle pour y rapporter par sertissage la résistance sérigraphiée a permis, en plus des avantages procurés par cette résistance, de vaincre la difficulté résidant à ce jour dans l'incapacité technique de sérigraphier un élément chauffant sur une plaque de tôle.

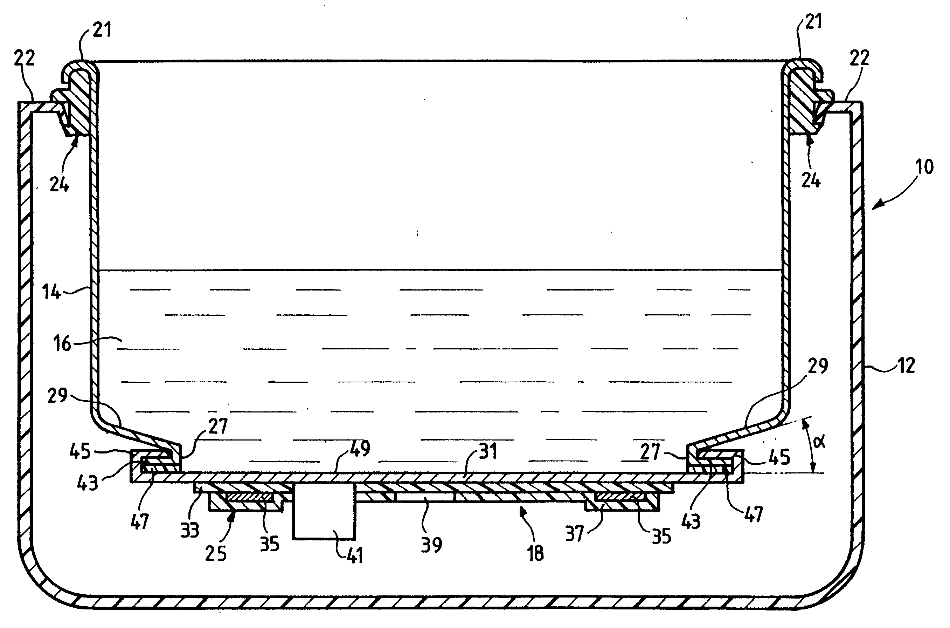

Les caractéristiques et avantages de l'invention ressortiront d'ailleurs de la description qui va suivre, à titre d'exemple non limitatif, en référence au dessin annexé dont la figure unique est une vue schématique simplifiée en coupe transversale d'un appareil électrique de cuisson d'aliments selon l'invention, comportant un élément chauffant plat à échelle agrandie.

Dans l'exemple de réalisation représenté sur la figure, l'appareil électrique de cuisson d'aliments 10 est une friteuse électrique, par exemple de forme générale rectangulaire, comportant, dans un boîtier 12 réalisé en une matière plastique telle que, par exemple, le polypropylène, une cuve 14 en tôle d'aluminium ou d'acier émaillé qui est montée fixe ou amovible et qui contient un bain de cuisson 16 constitué, par exemple, par de l'huile, ainsi que des moyens de chauffage électrique, désignés par le repère général 18, associés à la cuve 14.

Dans cet exemple, la cuve 14 est montée fixe dans le boîtier 12 en étant assemblés l'un à l'autre, par leurs bords périphériques supérieurs 21, respectivement 22, au moyen d'une pluralité de supports 24 réalisés en une matière thermiquement isolante résistant aux températures d'utilisation de la friteuse.

Selon l'invention, les moyens de chauffage 18 comprennent un élément chauffant plat 25 à résistance électrique sérigraphiée, qui est rapporté dans une découpe ou ouverture 27 pratiquée dans le fond 29 de la cuve 14 en tôle émaillée.

Dans l'exemple de réalisation illustré sur la figure, la découpe 27, de forme rectangulaire, est de grandes dimensions, de sorte que l'élément chauffant plat 25, de même forme rectangulaire, constitue la majeure partie du fond proprement dit de la cuve 14.

En regard de la figure, l'élément chauffant plat 25 est de faible épaisseur et comporte une plaque 31 en acier inoxydable, au moins une couche 33 en matière électriquement isolante déposée par sérigraphie sur la plaque 31, et au moins une piste résistive 35, de profil adapté, qui est sérigraphiée sur la couche 33 et qui est protégée par une autre couche 37 en matière électriquement isolante déposée par sérigraphie. On a représenté en 39 sur la figure l'une des deux pastilles conductrices sur laquelle est fixée l'une des deux connexions électriques (non représentées) de l'élément chauffant, et qui est également déposée par sérigraphie sur la couche 33. La piste résistive 35 est, comme il est connu en soi, tracée sur pratiquement toute la surface de la plaque 31 suivant des courbes imbriquées les unes dans les autres.

Cet élément chauffant plat 25 comporte en outre un moyen de régulation thermique 41, tel qu'un thermostat, qui est monté sur la face inférieure de la plaque 31 (en position illustrée sur la figure) au moyen d'organes de fixation appropriés, tels que par exemple des vis.

L'élément chauffant plat 25 peut également comporter plusieurs pistes résistives sérigraphiées 35 de différentes puissances qui sont alimentées séparément au moyen d'un organe de commutation (non représenté) de manière à sélectionner la puissance de chauffage appropriée suivant le type d'aliment à cuire.

Après réalisation par sérigraphie de l'élément chauffant plat 25 et montage du thermostat 41, la plaque 31 en acier inoxydable est rapportée par sertissage sur le fond 29 bordant la découpe 27. Dans l'exemple de réalisation représenté sur la figure, le fond 29 de la cuve bordant la découpe 27 présente un rebord périphérique 43 tourné vers le bas et vers l'extérieur de la cuve 14, et sur lequel est serti le bord périphérique 45 de la plaque 31, avec interposition d'un joint d'étanchéité en silicone 47 entre la face inférieure du rebord périphérique 43 du fond 29 de la cuve et la face supérieure 49 de la plaque 31 de l'élément chauffant 25. Comme on le voit bien sur la figure, la face supérieure 49 de la plaque 31 en acier inoxydable constitue, par masquage de la découpe 27 de grandes dimensions, la majeure partie du fond proprement dit de la cuve 14.

Comme le montre la figure, le fond 29 de la cuve bordant la découpe 27 est légèrement incliné en direction de l'élément chauffant plat 25, formant entre eux un angle d'inclinaison noté ∝, permettant ainsi d'accroître la rétention de l'huile en fond de cuve pour être toujours en contact direct avec l'élément chauffant 25, et partant, d'optimiser la transmission thermique entre l'élément chauffant 25 et le bain d'huile 16.

Grâce à la réalisation par sérigraphie de l'élément de chauffage 25 et à l'agencement de celui-ci dans la découpe 27 du fond 29 de la cuve, cet élément sérigraphié 25 permet de fournir une forte puissance thermique localisée répartie rapidement et uniformément dans le fond de la cuve 14, assurant une montée en température très rapide de l'huile. En outre, la conductibilité thermique transversale de la résistance 35 sérigraphiée sur la plaque en acier inoxydable 31 est très faible, ce qui permet avantageusement de limiter les risques d'échauffements sur les parois latérales de la cuve 14.

## Revendications

1. Appareil électrique de cuisson d'aliments, comportant, dans un boîtier (12), une cuve en tôle (14) montée fixe ou amovible et contenant un bain de cuisson (16), et des moyens de chauffage électrique (18) associés à la cuve (14),
**caractérisé en ce que** les moyens de chauffage (18) comprennent un élément chauffant plat (25) à résistance électrique sérigraphiée (35), qui est rapporté dans une découpe (27) pratiquée dans le fond (29) de la cuve (14), et **en ce que** le fond (29) de la cuve bordant la découpe (27) présente un rebord périphérique (43) tourné vers le bas et sur lequel est rapporté par sertissage l'élément chauffant plat (25).

2. Appareil selon la revendication 1,
**caractérisé en ce que** la cuve (14) est en tôle émaillée et l'élément chauffant plat (25) comporte, depuis l'intérieur de la cuve (14) vers le boîtier (12), une plaque en acier inoxydable (31) rapportée dans la découpe (27) du fond (29) de la cuve, au moins une couche (33) en matière électriquement isolante déposée par sérigraphie sur ladite plaque (31), et au moins une piste résistive (35) sérigraphiée sur ladite couche (33) et protégée par une autre couche (37) en matière électriquement isolante déposée par sérigraphie.

3. Appareil selon la revendication 1 ou 2,
**caractérisé en ce qu'**un joint d'étanchéité (47) est interposé entre l'élément chauffant plat (25) et le fond (29) de la cuve bordant la découpe (27).

4. Appareil selon l'une quelconque des revendications précédentes,
**caractérisé en ce que** le fond (29) de la cuve (14) est légèrement incliné en direction de l'élément chauffant plat (25).

5. Appareil selon l'une des revendications 2 à 4,
**caractérisé en ce que** l'élément chauffant plat (25) comporte plusieurs pistes résistives sérigraphiées (35) de différentes puissances qui sont alimentées séparément au moyen d'un organe de commutation.

6. Appareil selon l'une quelconque des revendications précédentes,
**caractérisé en ce qu'**il est constitué par une friteuse (10).

## Patentansprüche

1. Elektrisches Gargerät für Nahrungsmittel, das in einem Gehäuse (12) einen Behälter aus Blech (14), der fest oder abnehmbar montiert ist und ein Garbad (16) enthält, und eine mit dem Behälter (14) zusammenwirkende elektrische Heizvorrichtung (18) aufweist, **dadurch gekennzeichnet, daß** die Heizvorrichtung (18) ein ebenes Heizelement (25) mit einem durch Siebdruck hergestellten elektrischen Widerstand (35) aufweist, das in einem im Boden (29) des Behälters (14) ausgebildeten Ausschnitt (27) angebracht ist, und daß der den Ausschnitt (27) umgebende Boden (29) des Behälters eine nach unten gerichtete Umfangskrempe (43) aufweist, an der das ebene Heizelement (25) durch Bördeln angebracht ist.

2. Gerät nach Anspruch 1, **dadurch gekennzeichnet, daß** der Behälter (14) aus emailliertem Blech besteht und das ebene Heizelement (25) vom Inneren des Behälters (14) zum Gehäuse (12) hin eine Platte aus rostfreiem Stahl (31), die in dem Ausschnitt (27) des Bodens (29) des Behälters angebracht ist, mindestens eine Schicht (33) aus elektrisch isolierendem Material, die durch Siebdruck auf der Platte (31) abgeschieden ist, und mindestens eine auf der Schicht (33) durch Siebdruck aufgebrachte Widerstandsbahn (35), die durch eine andere durch Siebdruck aufgebrachte Schicht (37) aus elektrisch isolierendem Material geschützt ist, aufweist.

3. Gerät nach Anspruch 1 oder 2, **dadurch gekennzeichnet, daß** eine Dichtung (47) zwischen dem ebenen Heizelement (25) und dem an den Ausschnitt (27) grenzenden Boden (29) des Behälters eingelegt ist.

4. Gerät nach einem der vorangehenden Ansprüche, **dadurch gekennzeichnet, daß** der Boden (29) des Behälters (14) in Richtung des ebenen Heizelements (25) etwas geneigt ist.

5. Gerät nach einem der Ansprüche 2 bis 4, **dadurch gekennzeichnet, daß** das ebene Heizelement (25) mehrere durch Siebdruck aufgebrachte Widerstandsbahnen (35) von verschiedener Leistung aufweist, die getrennt mittels eines Schaltelements gespeist sind.

6. Gerät nach einem der vorangehenden Ansprüche, **dadurch gekennzeichnet, daß** es aus einer Fritteuse (10) besteht.

## Claims

1. Electric food cooking appliance, comprising, in a casing (12), a sheet-metal vessel (14) mounted so as to be fixed or removable and containing a cooking bath (16), and electrical heating means (18) associated with the vessel (14), **characterised in that** the heating means (18) comprise a flat heating component (25) with a screen-printed electrical element (35), which is attached in a cutout (27) made in the bottom (29) of the vessel (14), and **in that** the bottom (29) of the vessel bordering the cutout (27) has a peripheral rim (43) turned downwards and to which the flat heating component (25) is attached by crimping.

2. Appliance according to Claim 1, **characterised in that** the vessel (14) is made from enamelled sheet metal and the flat heating component (25) has, from the inside of the vessel (14) to the casing (12), a stainless steel plate (31) attached in the cutout (27) in the bottom (29) of the vessel, at least one layer (33) made from electrically insulating material deposited by screen printing on the said plate (31), and at least one resistive track (35) screen-printed on the said layer (33) and protected by another layer (37) of electrically insulated material deposited by screen printing.

3. Appliance according to Claim 1 or 2, **characterised in that** a sealing joint (47) is interposed between the flat heating element (25) and the bottom (29) of the vessel bordering the cutout (27).

4. Appliance according to any one of the preceding claims, **characterised in that** the bottom (29) of the vessel (14) is slightly inclined in the direction of the flat heating element (25).

5. Appliance according to one of Claims 2 to 4, **characterised in that** the flat heating element (25) comprises several screen-printed resistive tracks (35) of different powers which are supplied separately by means of a switching device.

6. Appliance according to any one of the preceding claims, **characterised in that** it consists of a deep fryer (10).
